# EUROPEAN PATENT APPLICATION

(11) **EP 4 067 302 A1**
(43) Date of publication of application: **05.10.2022**
(21) Application number: 20892132.0
(22) Date of filing: 26.11.2020
(51) Int. Cl.: C01B 21/068, C04B 35/587

(54) **METHOD FOR MANUFACTURING SILICON NITRIDE SINTERED COMPACT**

(30) Priority: 28.11.2019 JP 2019215103
(71) Applicant: Tokuyama Corporation, Shunan-shi, Yamaguchi 745-8648 (JP)
(72) Inventor: MABUCHI, Toshirou, Shunan-shi, Yamaguchi 745-8648 (JP); WAKAMATSU, Satoru, Shunan-shi, Yamaguchi 745-8648 (JP)
(74) Representative: Gerauer, Marc Philippé
(86) International application number: PCT/JP2020/044044
(87) International publication number: WO 2021/107021

(57) **Abstract**

The present invention is directed to a method for producing a silicon nitride sintered material, the method including heating a molded article, which contains a silicon nitride powder having a β phase ratio of 80% or more, a dissolved oxygen content of 0.2% by mass or less, and a specific surface area of 5 to 20 m²/g, and a sintering auxiliary containing a compound having no oxygen bond, and which has an overall oxygen content controlled to be 1 to 15% by mass and an aluminum element overall content controlled to be 800 ppm or less, to a temperature of 1,200 to 1,800°C in an inert gas atmosphere under a pressure of 0 MPa ·G or more and less than 0.1 MPa ·G to sinter the silicon nitride.

In the present invention, there can be provided a method for producing a silicon nitride sintered material, which method is advantageous in that a silicon nitride sintered material having high thermal conductivity can be obtained even when using a silicon nitride powder having a high β phase ratio and conducting calcination under normal pressure or substantially normal pressure.

## Description

### Technical Field

The present invention relates to a method for producing a silicon nitride sintered material having high thermal conductivity.

### Background Art

Among various types of ceramic sintered materials, a silicon nitride sintered material, which is obtained by sintering at a high temperature a silicon nitride powder having added thereto a certain type of sintering auxiliary, has characteristic features such that it is lightweight and has high mechanical strength, high chemical resistance, high electrical insulating properties and the like, and hence has been used as wear-resistant members, such as a ball bearing, and high-temperature structure members. Further, the silicon nitride sintered material can be improved in thermal conductivity by appropriately selecting the type of the auxiliary used or the sintering conditions, and therefore is being used as a heat-radiation substrate material having a small thickness and a high strength.

As a synthesis method for a silicon nitride powder, there have been known a reducing nitriding method in which nitrogen gas is allowed to flow through a silica powder as a raw material in the presence of a carbon powder to form silicon nitride (for example, PTL 1), a direct nitriding method in which metallic silicon (silicon powder) and nitrogen are reacted with each other at a high temperature (for example, PTL 2), an imide decomposition method in which a silicon halide and ammonia are reacted with each other, and the like.

Further, a method for synthesizing a metal nitride by a direct nitriding method using a self-propagating high temperature synthesis method (SHS method) has also been known. The self-propagating high temperature synthesis method is also called a combustion synthesis method, and is a synthesis method in which a raw material powder containing a silicon powder is introduced into a reaction vessel, and part of the raw material powder is ignited at a high temperature in a nitrogen atmosphere to cause a nitriding reaction, and the heat of combustion in nitriding generated due to the nitriding reaction is propagated around the powder, causing the whole of the powder to undergo a reaction, and the combustion synthesis method is known as a relatively inexpensive synthesis method.

With respect to the form of crystal of the silicon nitride powder, it is known that an α type and a β type are present. For example, as shown in NPL 1, an α silicon nitride powder is dissolved in a sintering auxiliary and redeposited as β silicon nitride in the sintering process, and consequently, a sintered material being dense and having high thermal conductivity can be obtained from the α silicon nitride powder, and therefore the α silicon nitride powder is currently widely used.

However, in the production of the α silicon nitride powder, it is likely that the process for the production is complicated. For example, when the α silicon nitride powder is produced by a direct nitriding method, nitriding must be conducted at a low temperature for a long period of time so as not to form a β silicon nitride powder, so that the production cost is increased (NPL 2).

Under the circumstances, a technique for producing a sintered material being dense and having high thermal conductivity using a β silicon nitride powder that is produced at a relatively low cost is desired.

PTL 3 has a description of the invention related to a highly thermal-conductive silicon nitride ceramic and a method for producing the same, and shows in the working Examples that a molded article, which contains a β silicon nitride powder having an average particle diameter of 0.5 µm, and a sintering auxiliary composed of ytterbium oxide and a magnesium silicon nitride powder, is sintered in pressurized nitrogen at 10 atm. at 1,900°C for 2 to 24 hours, obtaining a sintered material being dense and having high thermal conductivity.

### Citation List

### Patent Literature

PTL 1: JP 2009-161376 A
PTL 2: JP 10-218612 A
PTL 3: JP 2002-128569 A

### Non Patent Literature

NPL 1: Journal of the Marine Engineering Society in Japan, September 1993, Vol. 28, No. 9, p 548-556
NPL 2: Journal of the Ceramic Society of Japan 100 [11] 1366-1370 (1992)

### Summary of Invention

### Technical Problem

The sintered material of β silicon nitride powder disclosed in PTL 3 is produced in pressurized nitrogen at 10 atm. as mentioned above. Generally, when calcination is conducted under a pressure, it is likely that decomposition of silicon nitride as a raw material is suppressed, and, for this reason, silicon nitride can be calcined at a temperature as high as more than 1,800°C. It has been known that when calcination is conducted at such a high temperature under a high pressure, it is likely that the formed sintered material is densified, and the amount of impurity oxygen which is dissolved in the inside of the silicon nitride particles, and which is a cause of reducing the thermal conductivity can be reduced, so that a sintered material having high thermal conductivity can be obtained.

However, when calcination is conducted under a pressure as mentioned in PTL 3, it is necessary to use a pressure-resistant vessel in the production. Therefore, problems arise in that the production is limited in respect of facilities, and that the production cost is increased. Further, in PTL 3, there is neither description nor suggestion about a method for obtaining a sintered material having high thermal conductivity using a β silicon nitride powder under conditions at normal pressure (atmospheric pressure) or substantially normal pressure (pressure near atmospheric pressure) in which no pressure-resistant vessel is needed.

In view of the above-mentioned conventional problems, the present invention has been made, and a task of the present invention is to provide a method for producing a sintered material having high thermal conductivity using a silicon nitride powder having a high β phase ratio as a raw material by sintering the powder under conditions at normal pressure or substantially normal pressure, which conditions are generally considered to be those under which it is difficult to obtain a sintered material having high thermal conductivity.

### Solution to Problem

The present inventors have conducted extensive and intensive studies with a view toward attaining the above object. As a result, it has been found that a sintered material having high thermal conductivity can be obtained by using a molded article, which contains a silicon nitride powder having a β phase ratio, a dissolved oxygen content, and a specific surface area in respective specific ranges, and a sintering auxiliary containing a compound having no oxygen bond, and which has an overall oxygen content and an aluminum element overall content in respective specific ranges, and calcining the molded article under normal pressure or substantially normal pressure at a temperature in a specific range, and the present invention has been completed.

The gist of the present invention is the following items [1] to [10].
[1] A method for producing a silicon nitride sintered material, the method including heating a molded article, which contains a silicon nitride powder having a β phase ratio of 80% or more, a dissolved oxygen content of 0.2% by mass or less, and a specific surface area of 5 to 20 m²/g, and a sintering auxiliary containing a compound having no oxygen bond, and which has an overall oxygen content controlled to be 1 to 15% by mass and an aluminum element overall content controlled to be 800 ppm or less, to a temperature of 1,200 to 1,800°C in an inert gas atmosphere under a pressure of 0 MPa ·G or more and less than 0.1 MPa ·G to sinter the silicon nitride.
[2] The method for producing a silicon nitride sintered material according to item [1] above, wherein the silicon nitride powder has a total oxygen content of 1% by mass or more.
[3] The method for producing a silicon nitride sintered material according to item [1] or [2] above, wherein the molded article is obtained by molding a molding composition containing the silicon nitride powder, the sintering auxiliary, and water.
[4] The method for producing a silicon nitride sintered material according to any one of items [1] to [3] above, wherein the silicon nitride powder has an average particle diameter D₅₀ of 0.5 to 1.2 pm, wherein the proportion of particles having a particle diameter of 0.5 µm or less in the silicon nitride powder is 20 to 50% by mass, and the proportion of particles having a particle diameter of 1.0 pm or more in the silicon nitride powder is 20 to 50% by mass.
[5] The method for producing a silicon nitride sintered material according to any one of items [1] to [4] above, wherein the sintering auxiliary contains a metal oxide.
[6] The method for producing a silicon nitride sintered material according to any one of items [1] to [5] above, wherein the compound having no oxygen bond contained in the sintering auxiliary is a carbonitride compound containing a rare earth element or a magnesium element.
[7] The method for producing a silicon nitride sintered material according to any one of items [1] to [6] above, wherein the molded article has a density of 1.95 g/cm³ or more.
[8] The method for producing a silicon nitride sintered material according to any one of items [1] to [7] above, wherein the obtained silicon nitride sintered material has a thermal conductivity of 80 W/mK or more, as measured by a laser flash method.
[9] The method for producing a silicon nitride sintered material according to any one of items [1] to [8] above, wherein the obtained silicon nitride sintered material has a dielectric breakdown voltage of 11 kV or more.
[10] The method for producing a silicon nitride sintered material according to any one of items [1] to [9] above, wherein the obtained silicon nitride sintered material has an Ra of 0.6 pm or less.

### Advantageous Effects of Invention

In the present invention, there can be provided a method for producing a silicon nitride sintered material, which method is advantageous in that a silicon nitride sintered material having high thermal conductivity can be obtained even when using a silicon nitride powder having a high β phase ratio and conducting calcination under normal pressure or substantially normal pressure.

### Description of Embodiments

### [Method for producing a silicon nitride sintered material]

The method for producing a silicon nitride sintered material of the present invention includes heating a molded article, which contains a silicon nitride powder having a β phase ratio of 80% or more, a dissolved oxygen content of 0.2% by mass or less, and a specific surface area of 5 to 20 m²/g, and a sintering auxiliary containing a compound having no oxygen bond, and which has an overall oxygen content controlled to be 1 to 15% by mass and an aluminum element overall content controlled to be 800 ppm or less, to a temperature of 1,200 to 1,800°C in an inert gas atmosphere under a pressure of 0.1 MPa ·G or more and less than 0.5 MPa ·G to sinter the silicon nitride.

### [Molded article]

The molded article used in the method for producing a silicon nitride sintered material of the present invention is described. The molded article contains the specific silicon nitride powder and sintering auxiliary described below.

### <Silicon nitride powder>

### (β Phase ratio)

The silicon nitride powder contained in the molded article has a β phase ratio of 80% or more. The silicon nitride powder having a β phase ratio of 80% or more can be obtained without strictly controlling the conditions for production, and therefore can be produced at a relatively low cost. Accordingly, by using the silicon nitride powder having a high β phase ratio, the whole production cost for the silicon nitride sintered material can be suppressed. Further, by setting a high β phase ratio, the amount of oxygen which is incorporated when α silicon nitride particles being calcined undergo transformation to β silicon nitride particles can be further reduced. The β phase ratio of the silicon nitride powder is preferably 85% or more, more preferably 90% or more.

The β phase ratio of the silicon nitride powder means a ratio of the peak intensity of the β phase to the total peak intensity of the α phase and the β phase with respect to the silicon nitride powder [100 × (peak intensity of the β phase)/(peak intensity of the α phase + peak intensity of the β phase)], and is determined by powder X-ray diffraction (XRD) measurement using a CuKa ray. More specifically, the β phase ratio is determined by calculating a weight ratio of the α phase and the β phase of the silicon nitride powder in accordance with the method described in C. P. Gazzara and D. R. Messier: Ceram. Bull., 56 (1977), 777-780.

### (Dissolved oxygen content)

The silicon nitride powder has a dissolved oxygen content of 0.2% by mass or less. When the dissolved oxygen content of the silicon nitride powder is more than 0.2% by mass, the silicon nitride sintered material obtained by calcination conducted under the calcination conditions which are a characteristic feature of the present invention is reduced in the thermal conductivity. From the viewpoint of obtaining a silicon nitride sintered material having high thermal conductivity, the dissolved oxygen content of the silicon nitride powder is preferably 0.1% by mass or less.

The dissolved oxygen content means oxygen dissolved in the inside of particles of the silicon nitride powder (hereinafter, frequently referred to as "internal oxygen"), and does not include oxygen (hereinafter, frequently referred to as "external oxygen") derived from an oxide inevitably present on the surface of the particles, such as SiO₂.

The dissolved oxygen content can be measured by the method described in the Examples below.

With respect to the method of controlling the dissolved oxygen content of the silicon nitride powder, there is no particular limitation, but, for example, a high-purity raw material is preferably used when producing the silicon nitride powder. For example, when the silicon nitride powder is produced by a direct nitriding method, a silicon powder free of a factor of having oxygen dissolved in the inside of the powder is preferably used as a raw material for the silicon nitride powder, specifically, a silicon powder derived from silicon of a semiconductor grade, such as powder of cuttings generated when, for example, processing the silicon by cutting or the like, is preferably used. The above-mentioned silicon of a semiconductor grade is typically polycrystalline silicon that is obtained by a so-called "Siemens method" in which high-purity trichlorosilane and hydrogen are reacted with each other in a bell-jar reaction vessel.

### (Specific surface area)

The silicon nitride powder has a specific surface area of 5 to 20 m²/g. When the specific surface area of the silicon nitride powder is more than 20 m²/g, it is difficult to reduce the dissolved oxygen content, and, when the specific surface area is less than 5 m²/g, a silicon nitride sintered material having high density and high strength is difficult to obtain. The specific surface area of the silicon nitride powder is preferably 7 to 20 m²/g, more preferably 12 to 15 m²/g.

In the present invention, the specific surface area means a BET specific surface area measured using a single point BET method by nitrogen gas adsorption.

### (Average particle diameter)

The silicon nitride powder preferably has an average particle diameter D₅₀ of 0.5 to 3 µm, more preferably 0.7 to 1.7 pm. When using the silicon nitride powder having such an average particle diameter, sintering proceeds more smoothly. The average particle diameter D₅₀ is a 50% volume based value, as measured by a laser diffraction-scattering method.

The proportion of particles having a particle diameter of 0.5 pm or less in the silicon nitride powder is preferably 20 to 50% by mass, more preferably 20 to 40% by mass. Further, the proportion of particles having a particle diameter of 1.0 pm or more in the silicon nitride powder is preferably 20 to 50% by mass, more preferably 20 to 40% by mass. When using the silicon nitride powder having such a particle size distribution, a silicon nitride sintered material being dense and having high thermal conductivity can be easily obtained.

The reason for this is not clarified, but is considered that, differing from the α silicon nitride particles, the β silicon nitride particles are unlikely to be dissolved and redeposited during calcination, and a predetermined balance between fine particles and coarse particles is achieved on the initial stage of calcination, making it possible to obtain a denser sintered material.

### (Total oxygen content)

With respect to the total oxygen content of the silicon nitride powder, there is no particular limitation, but the total oxygen content is preferably 1% by mass or more. The total oxygen content is a total of the above-mentioned dissolved oxygen (internal oxygen) content and external oxygen content. When the total oxygen content of the silicon nitride powder is the above lower limit or more, for example, an effect is exhibited such that silicon oxide or the like present on the surface of the particles is likely to promote sintering. Further, the total oxygen content of the silicon nitride powder is preferably 10% by mass or less.

When the total oxygen content of the silicon nitride powder is 1% by mass or more, the obtained sintered material can be increased in the thermal conductivity as long as the dissolved oxygen content of the silicon nitride powder is the predetermined value or less as mentioned above.

The total oxygen content of the silicon nitride powder can be measured by the method described in the Examples below.

The amount of the silicon nitride powder in the molded article is preferably 80% by mass or more, preferably 90% by mass or more, based on the mass of the molded article.

### <Production of the silicon nitride powder>

With respect to the method for producing the silicon nitride powder, there is no particular limitation as long as the silicon nitride powder having the above-mentioned properties can be obtained by the method. As a method for producing the silicon nitride powder, for example, there can be applied a reducing nitriding method in which nitrogen gas is allowed to flow through a silica powder as a raw material in the presence of a carbon powder to form silicon nitride, a direct nitriding method in which a silicon powder and nitrogen are reacted with each other at a high temperature, or an imide decomposition method in which a silicon halide and ammonia are reacted with each other, but, from the viewpoint of facilitating production of the silicon nitride powder having the above-mentioned properties, a direct nitriding method is preferred, and especially, a direct nitriding method (combustion synthesis method) using a self-propagating high temperature synthesis method is more preferred.

The combustion synthesis method is a method in which a silicon powder is used as a raw material, and part of the raw material powder is forcibly ignited in a nitrogen atmosphere so that the raw material compound undergoes self-heat-generation, synthesizing silicon nitride. The combustion synthesis method is a known method, and reference can be made to, for example, JP 2000-264608 A, International Patent Application Publication No. 2019/167879, and the like.

### <Sintering auxiliary>

The molded article in the present invention contains a sintering auxiliary containing a compound having no oxygen bond. By using such a sintering auxiliary, the obtained silicon nitride sintered material can be prevented from being reduced in thermal conductivity.

The above-mentioned compound having no oxygen bond is preferably a carbonitride compound containing a rare earth element or a magnesium element (hereinafter, frequently referred to as "specific carbonitride compound"). By using such a specific carbonitride compound, it is likely that a silicon nitride sintered material having high thermal conductivity can be more effectively obtained. The reason for this is not clarified, but is presumed that the specific carbonitride compound functions as a getter which adsorbs oxygen contained in the silicon nitride powder, so that a silicon nitride sintered material having high thermal conductivity can be obtained.

In the carbonitride compound containing a rare earth element, the rare earth element is preferably Y (yttrium), La (lanthanum), Sm (samarium), Ce (cerium), or the like.

Examples of the carbonitride compounds containing a rare earth element include Y₂Si₄N₆C, Yb₂Si₄N₆C, and Ce₂Si₄N₆C, and, of these, from the viewpoint of easily obtaining a silicon nitride sintered material having high thermal conductivity, Y₂Si₄N₆C and Yb₂Si₄N₆C are preferred.

Examples of the carbonitride compounds containing a magnesium element include MgSi₄N₆C.

These specific carbonitride compounds can be used individually or in combination.

Among the above-mentioned carbonitride compounds containing a rare earth element or a magnesium element, especially preferred compounds are Y₂Si₄N₆C and MgSi₄N₆C.

Further, the sintering auxiliary can further contain a metal oxide, in addition to the compound having no oxygen bond. When using the sintering auxiliary containing a metal oxide, sintering of the silicon nitride powder is likely to smoothly proceed, so that a sintered material being denser and having high strength can be easily obtained.

Examples of metal oxides include yttria (Y₂O₃), magnesia (MgO), and ceria (CeO). Of these, yttria is preferred. These metal oxides can be used individually or in combination.

The mass ratio of the compound having no oxygen, such as the specific carbonitride compound, and the metal oxide contained in the sintering auxiliary (compound having no oxygen/metal oxide) is preferably 0.2 to 4, more preferably 0.6 to 2. When the mass ratio is in the above range, a silicon nitride sintered material being dense and having high thermal conductivity can be easily obtained.

Further, the amount of the sintering auxiliary contained in the molded article is preferably 5 to 20 parts by mass, more preferably 7 to 10 parts by mass, relative to 100 parts by mass of the silicon nitride powder.

### <Binder>

The molded article can be obtained by molding using a binder. In this case, the molded article can be obtained by molding the below-described molding composition and, if necessary, drying the resultant molded article and degreasing it to remove the binder.

With respect to the binder, there is no particular limitation, but examples of binders include polyvinyl alcohol, polyvinyl butyral, methyl cellulose, alginic acid, polyethylene glycol, carboxymethyl cellulose, ethyl cellulose, and an acrylic resin.

The amount of the binder contained in the molding composition used in the production of the molded article is preferably 1 to 30 parts by mass, relative to 100 parts by mass of the silicon nitride powder, and can be appropriately selected according to the molding method.

### <Overall oxygen content>

In the present invention, the molded article has an overall oxygen content of 1 to 15% by mass. The molded article means, as understood from the above description, a molded article in a state such that the molded article is ready for sintering, namely means a molded article in a state such that the molded article does not contain the binder, solvent, and the like used in producing the molded article, which are removed by a treatment, such as drying or degreasing, before sintering. When the overall oxygen content of the molded article is more than 15% by mass, the obtained silicon nitride sintered material is reduced in thermal conductivity due to the effect of oxygen. Further, when the overall oxygen content is less than 1% by mass, sintering is unlikely to proceed, so that a dense silicon nitride sintered material cannot be obtained, lowering the thermal conductivity and strength. The overall oxygen content of the molded article is preferably 2 to 10% by mass, more preferably 3 to 5% by mass. The overall oxygen content in a desired range can be achieved by appropriately selecting the total oxygen content of the silicon nitride used, the type of the sintering auxiliary, the molding method or the like.

### <Aluminum element overall content>

The molded article has an aluminum element overall content (mass) of 800 ppm or less. That is, the molded article used in the present invention contains an aluminum element in a very small amount, and, by virtue of this, a silicon nitride sintered material having high thermal conductivity can be obtained. The aluminum element overall content of the molded article is preferably 500 ppm or less, more preferably 200 ppm or less.

### <Density of the molded article>

With respect to the density of the molded article, there is no particular limitation, but the density is preferably 1.95 g/cm³ or more, more preferably 1.98 g/cm³ or more. When the density of the molded article is the above lower limit or more, a silicon nitride sintered material having excellent thermal conductivity can be easily obtained.

### [Production of the molded article]

With respect to the method for producing the molded article used in the present invention, there is no particular limitation, and there can be mentioned, for example, a method in which a molding composition containing at least a silicon nitride powder and a sintering auxiliary is molded by a known molding means. Examples of known molding means include a press molding method, an extrusion molding method, an injection molding method, and a sheet forming method (doctor blade method).

From the viewpoint of easy molding, a binder can be further incorporated into the molding composition. The type of the binder is as mentioned above.

The amount of the sintering auxiliary and the amount of the binder in the molding composition, relative to 100 parts by mass of the silicon nitride powder, are similar to those mentioned above in connection with the molded article.

Further, the molding composition can contain a solvent from the viewpoint of easy handling and easy molding. With respect to the solvent, there is no particular limitation, and examples of solvents include organic solvents, such as an alcohol and a hydrocarbon, and water, but, in the present invention, water is preferably used. That is, it is preferred that the molded article is obtained by molding a molding composition containing a silicon nitride powder, a sintering auxiliary, and water. When water is used as a solvent, a burden on the environment is advantageously reduced, as compared to that in the case where an organic solvent is used.

Generally, when water is used as a solvent to be contained in the molding composition, oxygen derived from water is likely to remain inside of the silicon nitride sintered material obtained by calcining the molded article, so that the resultant sintered material is likely reduced in thermal conductivity. By contrast, in the present invention, for example, the above-mentioned silicon nitride powder having a dissolved oxygen content which is the predetermined value or less is used and therefore, even when the overall oxygen content is increased due to the use of water as a solvent, a sintered material having high thermal conductivity can be obtained by controlling the overall oxygen content.

### [Method for sintering]

In the method for producing a silicon nitride sintered material of the present invention, the above-mentioned molded article is calcined under predetermined conditions to sinter the silicon nitride. The conditions for the calcination are described below.

Calcination is conducted in an inert gas atmosphere. The inert gas atmosphere means, for example, a nitrogen atmosphere or an argon atmosphere.

Further, calcination is conducted in such an inert gas atmosphere under a pressure of 0 MPa ·G or more and less than 0.1 MPa ·G. The pressure is preferably 0 MPa ·G or more and 0.05 MPa ·G or less, more preferably 0 MPa ·G (i.e., normal pressure (atmospheric pressure)). In the unit MPa ·G of the pressure, the letter G appearing at the end means a gauge pressure.

Generally, silicon nitride easily decomposes under a pressure in such a normal pressure or substantially normal pressure region, and therefore a temperature controlled to be, for example, higher than 1,800°C cannot be employed, making it difficult to obtain a silicon nitride sintered material being densified and having high thermal conductivity. By contrast, in the method of the present invention, the above-mentioned specific molded article is used and therefore, even when employing a pressure in the above range, a silicon nitride sintered material having high thermal conductivity can be obtained.

Further, silicon nitride can be sintered under conditions at normal pressure or substantially normal pressure, and hence there is no need to produce a sintered material in a pressure vessel (pressure-resistant vessel). Therefore, the facilities for production can be simplified, making it possible to reduce the production cost. Specifically, calcination can be conducted using a batch furnace, such as a muffle furnace or a tubular furnace, or can be conducted using a continuous furnace, such as a pusher furnace, and thus a variety of methods can be applied to the production, improving the productivity.

The molded article is calcined by heating to a temperature of 1,200 to 1,800°C. When the temperature is lower than 1,200°C, sintering of silicon nitride unlikely proceeds, and, when the temperature is higher than 1,800°C, silicon nitride is likely to decompose. From such a point of view, the heating temperature for calcination is preferably 1,600 to 1,800°C.

Further, with respect to the calcination time, there is no particular limitation, but the calcination time is preferably about 3 to 20 hours.

When a binder is used in forming the molded article, it is preferred that the degreasing step is provided and removal of organic components, such as a binder, is conducted in the degreasing step. With respect to the degreasing conditions, there is no particular limitation, but degreasing can be made by, for example, heating the molded article to 450 to 650°C in air or an inert atmosphere of nitrogen, argon, or the like.

### [Physical properties of the silicon nitride sintered material]

The silicon nitride sintered material obtained by the method of the present invention exhibits high thermal conductivity. The obtained silicon nitride sintered material preferably has a thermal conductivity of 80 W/mK or more, more preferably 100 W/mK or more.

### The thermal conductivity can be measured by a laser flash method.

The silicon nitride sintered material obtained by the method of the present invention preferably has a dielectric breakdown voltage of 11 kV or more, more preferably 13 kV or more. The silicon nitride sintered material having such a dielectric breakdown voltage is unlikely to suffer dielectric breakdown, and thus has excellent reliability as a product.

The silicon nitride sintered material obtained by the method of the present invention is calcined under mild conditions (conditions at normal pressure or substantially normal pressure and at a temperature lower than those generally used), and therefore has small surface roughness. Specifically, the obtained silicon nitride sintered material preferably has an Ra (arithmetic average roughness) of 0.6 pm or less, more preferably 0.55 pm or less. The silicon nitride sintered material having such an Ra has excellent adhesion to an object onto which the sintered material is used, such as a metal. Further, the operation time for mirror polishing made if necessary for the silicon nitride sintered material can be reduced.

### The Ra can be measured by means of a surface roughness meter.

Further, the measurement of the thermal conductivity, dielectric breakdown voltage, and Ra is conducted after the surface of the silicon nitride sintered material is subjected to blast treatment to remove deposits, such as a release agent, deposited on the sintered material during the sintering.

### Examples

Hereinbelow, the present invention will be described in more detail with reference to the following Examples, which should not be construed as limiting the scope of the present invention.

In the following Examples, various physical properties were measured in accordance with the methods described below.

### (1) β Phase ratio of a silicon nitride powder

A β phase ratio of a silicon nitride powder was determined by powder X-ray diffraction (XRD) measurement using a CuKa ray. Specifically, a β phase ratio was determined by calculating a weight ratio of the α phase and the β phase of a silicon nitride powder in accordance with the method described in C. P. Gazzara and D. R. Messier: Ceram. Bull., 56 (1977), 777-780.

### (2) Specific surface area of a silicon nitride powder

A specific surface area of a silicon nitride powder was measured using a BET method specific surface area measurement apparatus (Macsorb HM model-1201), manufactured by Mountech Co., Ltd., and using a single point BET method by nitrogen gas adsorption.

Before conducting the above-mentioned specific surface area measurement, the silicon nitride powder to be measured was subjected to heat treatment in air at 600°C for 30 minutes in advance to remove organic materials adsorbing on the powder surface.

### (3) Dissolved oxygen content and total oxygen content of a silicon nitride powder

A dissolved oxygen content of a silicon nitride powder was measured by an inert gas fusion-infrared absorption method. The measurement was conducted by means of an oxygen-nitrogen analyzer ("EMGA-920", manufactured by HORIBA, Ltd.).

As a sample, 25 mg of a silicon nitride powder, which was used in each of the Examples and Comparative Example, was sealed in a tin capsule (Tin Cupsule, manufactured by LECO Japan Corporation, was used as a tin capsule) and introduced into a graphite crucible, and heated at 5.5 kW for 20 seconds to degas the adsorbing gas, and then the temperature was increased at 0.8 kW for 10 seconds and at from 0.8 kW to 4 kW for 350 seconds and an amount of carbon dioxide generated during the temperature increase was measured, and converted to a value in terms of an oxygen content. In the temperature increase for 350 seconds, the oxygen that is first generated corresponds to oxygen (external oxygen) derived from an oxide present on the surface of the silicon nitride particles, and the oxygen that is then generated corresponds to dissolved oxygen (internal oxygen) dissolved in crystals of silicon nitride, and thus, a vertical line was drawn through a portion corresponding to the valley between these two measurement peaks, from which the background preliminarily measured was subtracted, to separate the two peaks. A proportion of the areas of the peaks was calculated to determine a dissolved oxygen (internal oxygen) content and an external oxygen content.

### (4) Particle diameter of a silicon nitride powder

### (i) Pretreatment for a sample

As a pretreatment for a silicon nitride powder which is a sample, the silicon nitride powder was subjected to calcination treatment in air at a temperature of about 500°C for 2 hours. The reason for conducting the calcination treatment is as follows. When the silicon nitride powder has a small surface oxygen amount, or when the surface of particles of the silicon nitride powder is covered with a hydrophobic material, such as a pulverizing auxiliary used upon pulverization, so that the particles are hydrophobic, it is likely that the silicon nitride powder is unsatisfactorily dispersed in water for particle diameter measurement, making it difficult to achieve particle diameter measurement with reproducibility. For this reason, the silicon nitride powder as a sample is subjected to calcination treatment in air at a temperature of about 200 to 500°C for several hours to impart hydrophilicity to the silicon nitride powder, and the resultant silicon nitride powder is easily dispersed in a water solvent, enabling particle diameter measurement with high reproducibility. In this connection, it has been found that the calcination in air causes almost no effect on the particle diameter measured.

### (ii) Measurement of a particle diameter

In a beaker (inner diameter: 60 mmϕ; height: 70 mm) having a marked line of 100 ml at the most were placed 90 ml of water and 5 ml of sodium pyrophosphate having a concentration of 5% by mass, and the resultant mixture was well stirred, and then about an ear-pick of a silicon nitride powder as a sample was added to the mixture, and the silicon nitride powder was dispersed by means of an ultrasonic homogenizer (US-300E, manufactured by Nissei Corporation; chip diameter: 26 mm) with an AMPLITUDE of 50% (about 2 amperes) for 2 minutes.

The powder was dispersed in the state in which the chip was inserted into the beaker so that the end of the chip was positioned at a 20 ml marked line of the beaker.

Then, with respect to the obtained dispersion of the silicon nitride powder, a particle size distribution was measured using a laser diffraction-scattering method particle size distribution measurement apparatus (Microtrac MT3300EXII, manufactured by MicrotracBEL Corp.). In the conditions for measurement, water (refractive index: 1.33) was selected as a solvent, a refractive index of 2.01 was selected as particle properties, transmission was selected as particle transmission properties, and a non-spherical shape was selected as a particle shape. A particle diameter corresponding to 50% of the cumulative curve of the particle diameter distribution measured in the above particle diameter distribution measurement is determined as an average particle diameter (average particle diameter D50).

### (5) Overall oxygen content of a molded article

An overall oxygen content of a molded article was measured by an inert gas fusion-infrared absorption method. The measurement was conducted by means of an oxygen-nitrogen analyzer ("EMGA-920", manufactured by HORIBA, Ltd.).

As a sample, 15 mg of a molded article was sealed in a tin capsule (Tin Cupsule, manufactured by LECO Japan Corporation, was used as a tin capsule) and introduced into a graphite crucible, and heated at 5.5 kW for 20 seconds, and further heated at 5.0 kW for 20 seconds to degas the adsorbing gas, and then heated at 5.0 kW for 75 seconds and an amount of carbon dioxide generated during the heating was measured, and converted to a value in terms of an oxygen content.

### (6) Density of a molded article

Using an automatic specific gravity meter (Model DMA-220H, manufactured by Shinko Electronics Co., Ltd.), a density of each molded article was measured, and an average of the measurements of 15 pieces was determined as a density of the molded article.

### (7) Aluminum element overall content of a molded article

An aluminum element overall content of a molded article was measured using an inductively coupled plasma emission spectrometry apparatus ("iCAP 6500 DUO", manufactured by Thermo Fisher Scientific K.K.).

### (8) Thermal conductivity of a silicon nitride sintered material

A thermal conductivity of a silicon nitride sintered material was measured by a laser flash method using LFA-502, manufactured by Kyoto Electronics Manufacturing Co., Ltd. The thermal conductivity is determined by multiplying a thermal diffusivity, a sintered material density, and a sintered material specific heat. As the specific heat of silicon nitride sintered material, a value of 0.68 (J/g·K) was employed. The sintered material density was measured using an automatic specific gravity meter (Model DMA-220H, manufactured by Shinko Electronics Co., Ltd.).

The measurement of thermal conductivity was conducted after the surface of a silicon nitride sintered material was subjected to blast treatment and then the surface was coated with Au and coated with carbon.

### (9) Dielectric breakdown voltage of a silicon nitride sintered material

A dielectric breakdown voltage was measured in accordance with JIS C2110. Specifically, using a dielectric strength measurement apparatus ("TK-O-20K", manufactured by Keisoku Giken Co., Ltd.), a voltage was applied to a silicon nitride sintered material, and a voltage was measured at a time when dielectric breakdown was caused.

### (10) Ra (Arithmetic average roughness) of a silicon nitride sintered material

With respect to the Ra of a silicon nitride sintered material, using a surface roughness measurement apparatus ("Surfcom 480A", manufactured by Tokyo Seimitsu Co., Ltd.), a probe was allowed to scan the sintered material with an evaluation length of 2.5 mm at a measurement speed of 0.3 mm/s to measure an Ra.

The surface of the silicon nitride sintered material was subjected to blast treatment to remove a release agent and the like, and the resultant silicon nitride sintered material was used.

In the Examples and Comparative Example, the raw materials shown below were used.

### <Silicon nitride powder>

Silicon nitride powders A, B, and C shown in Table 1 were prepared. These powders were produced by the methods described below.

### (Production of silicon nitride powder A)

A silicon powder (semiconductor grade; average particle diameter: 5 pm) and a silicon nitride powder (average particle diameter: 1.5 pm) as a diluent were mixed to obtain a raw material powder (Si: 80% by mass; Si₃N₄: 20% by mass). A reaction vessel was filled with the obtained raw material powder to form a raw material powder layer. Then, the reaction vessel was placed in a pressure-resistant closed reactor having an ignition apparatus and a gas feeding and exhaust mechanism, and the inside of the reactor was deaerated by reducing the pressure, and then nitrogen gas was fed to replace the air in the reactor by nitrogen. Subsequently, nitrogen gas was slowly fed to increase the pressure to 0.7 MPa. At a time when the pressure reached a predetermined pressure (at a time of ignition), the raw material powder had a bulk density of 0.5 g/cm³.

Then, the end portion of the raw material powder in the reaction vessel was ignited to cause a combustion synthesis reaction, obtaining a bulk product formed from silicon nitride. The obtained bulk product was crushed by rubbing the bulk with one another, and then an appropriate amount of the resultant product was placed in an oscillating mill and pulverized for 6 hours. With respect to the pulverizing apparatus and pulverizing method, a general apparatus and method were used, but, as a measure to prevent heavy metal contamination, the inside of the pulverizing apparatus was lined with urethane, and balls using silicon nitride as a base material were used as a pulverizing medium. Further, immediately before starting pulverization, ethanol in an amount of 1% by mass was added as a pulverizing auxiliary, and the crushed product was pulverized using the pulverizing apparatus in the closed state, and then subjected to oxidation treatment by heating in air to control the total oxygen concentration, obtaining a silicon nitride powder A. The results of the measurement of the obtained silicon nitride powder A were shown in Table 1.

### (Production of silicon nitride powder B)

As a silicon nitride powder B, the silicon nitride powder shown in Table 1 was prepared by heating a commercially available silicon nitride powder in a nitrogen atmosphere.

### (Production of silicon nitride powder C)

A silicon nitride powder C was obtained in substantially the same manner as in the method for producing the silicon nitride powder A, except that the oxidation treatment was not conducted. The results of the measurement of the obtained silicon nitride powder C were shown in Table 1.

**[Table 1]**

| | Silicon nitride powder A | Silicon nitride powder B | Silicon nitride powder C |
|---|---|---|---|
| β Phase ratio (%) | 99 | 97 | 99 |
| Dissolved oxygen content (% by mass) | 0.06 | 0.31 | 0.06 |
| Specific surface area (m²/g) | 7 | 9.7 | 7 |
| Total oxygen content (% by mass) | 1.844 | 0.997 | 0.825 |
| Average particle diameter D50 (µm) | 1.845 | 0.7 | 1.803 |
| Proportion of 0.5 µm or less particles (% by mass) | 25 | 18 | 21 |
| Proportion of 1.0 µm or more particles (% by mass) | 32 | 15 | 36 |

### <Sintering auxiliary>

### 1. Compound having no oxygen bond

A Y₂Si₄N₆C powder was prepared by heating synthesis from yttria (manufactured by Shin-Etsu Chemical Co., Ltd.), a silicon nitride powder (the above-described powder produced by ourselves), and a carbon powder (manufactured by Mitsubishi Chemical Corporation) using the reaction formula shown below.

8Si₃N₄ + 6Y₂O₃ + 15C + 2N₂ → 6Y₂Si₄N₆C + 9CO₂

A MgSi₄N₆C powder was similarly prepared by heating synthesis using the reaction formula shown below.

Si₃N₄ + MgSiN₂ + C → MgSi₄N₆C

### 2. Metal oxide

Yttria (Y₂O₃), manufactured by Shin-Etsu Chemical Co., Ltd.

### <Binder>

As a binder, a polyvinyl alcohol resin (Japan Vam & Poval Co., Ltd.) which is an aqueous resin binder was used.

### [Example 1]

100 Parts by mass of the silicon nitride powder A, 2 parts by mass of a compound having no oxygen bond Y₂Si₄N₆C, 5 parts by mass of MgSi₄N₆C, and 3 parts by mass of yttria were weighed, and pulverized and mixed by means of a ball mill using water as a dispersing medium and a resin pot and silicon nitride balls for 24 hours. The water was preliminarily weighed so that the concentration of the obtained slurry became 60 wt%, and charged into the resin pot. After pulverizing and mixing, 22 parts by mass of an aqueous resin binder was added and the resultant mixture was further mixed for 12 hours to obtain a molding composition in the form of a slurry. Then, the obtained molding composition was controlled in viscosity using a vacuum deaerator (manufactured by Sayama Riken Ltd.) to prepare a coating slurry. Then, the molding composition having the viscosity controlled was subjected to sheet forming by a doctor blade method, obtaining a sheet molded article having a width of 75 cm and a thickness of 0.42 mmt.

The above-obtained sheet molded article was subjected to degreasing treatment in dry air at a temperature of 550°C to obtain a degreased molded article. The physical properties of the obtained molded article were shown in Table 2.

Then, the degreased molded article was placed in a calcination vessel and calcined in a nitrogen atmosphere under a pressure of 0.02 MPa ·G at 1,780°C for 9 hours to obtain a silicon nitride sintered material. The physical properties of the sintered material were shown in Table 2.

### [Comparative Example 1]

A silicon nitride sintered material was obtained in substantially the same manner as in Example 1 except that the silicon nitride powder A used in Example 1 was changed to the silicon nitride powder B. The physical properties of the sintered material were shown in Table 2.

### [Example 2]

A silicon nitride sintered material was obtained in substantially the same manner as in Example 1 except that the amount of the sintering auxiliary was changed to that shown in Table 2, that the overall oxygen content and molded article density shown in Table 2 were employed, and that the calcination temperature was changed to 1,740°C. The physical properties of the sintered material were shown in Table 2.

### [Example 3]

A silicon nitride sintered material was obtained in substantially the same manner as in Example 1 except that the silicon nitride powder C was used as a silicon nitride powder, and that the amount of the sintering auxiliary was controlled so as to change the overall oxygen content and the molded article density to those shown in Table 2. The physical properties of the sintered material were shown in Table 2.

**[Table 2]**

| | | | Example 1 | Comparative Example 1 | Example 2 | Example 3 |
|---|---|---|---|---|---|---|
| Molded article | Silicon nitride powder (parts by mass) | | A: 100 | B: 100 | A: 100 | C: 100 |
| | Sintering auxiliary (part(s) by mass) | MgSi₄N₆C | 5 | 5 | 4 | 5 |
| | | Y₂Si₄N₆C | 2 | 2 | 1 | 2 |
| | | Y₂O₂ | 3 | 3 | 9 | 6 |
| | Overall oxygen content (% by mass) | | 4 | 5 | 8 | 5 |
| | Dissolved oxygen content (% by mass) | | 0.06 | 0.31 | 0.06 | 0.06 |
| | Aluminum element overall content (ppm) | | 500 | 1000 | 500 | 500 |
| | Density (g/cm³) | | 1.95 | 1.82 | 2.05 | 1.92 |
| Calcination conditions | Pressure (MPa ·G) | | 0.02 | 0.02 | 0.02 | 0.02 |
| | Temperature (°C) | | 1780 | 1780 | 1740 | 1780 |
| Sintered material | Physical properties | Relative density (%) | >99% | 98% | >99% | >99% |
| | | Thermal conductivity (W/mK) | 106 | 58 | 92 | 99 |
| | | Ra (µm) | 0.52 | 0.58 | 0.53 | 0.51 |
| | | Dielectric breakdown voltage (kV) | 14 | 11 | 14 | 14 |

As apparent from the results of the Examples, in the case where a specific molded article was used, even when the silicon nitride powder used as a raw material had a high β phase ratio and the pressure for calcination was low, a sintered material having high thermal conductivity was obtained.

By contrast, in the case where the molded article which does not satisfy the requirements of the present invention was used, when the pressure for calcination was low, a sintered material having high thermal conductivity could not be obtained.

## Claims

1. A method for producing a silicon nitride sintered material, the method comprising heating a molded article, which contains a silicon nitride powder having a β phase ratio of 80% or more, a dissolved oxygen content of 0.2% by mass or less, and a specific surface area of 5 to 20 m²/g, and a sintering auxiliary containing a compound having no oxygen bond, and which has an overall oxygen content controlled to be 1 to 15% by mass and an aluminum element overall content controlled to be 800 ppm or less, to a temperature of 1,200 to 1,800°C in an inert gas atmosphere under a pressure of 0 MPa ·G or more and less than 0.1 MPa ·G to sinter the silicon nitride.

2. The method for producing a silicon nitride sintered material according to claim 1, wherein the silicon nitride powder has a total oxygen content of 1% by mass or more.

3. The method for producing a silicon nitride sintered material according to claim 1 or 2, wherein the molded article is obtained by molding a molding composition containing the silicon nitride powder, the sintering auxiliary, and water.

4. The method for producing a silicon nitride sintered material according to any one of claims 1 to 3, wherein the silicon nitride powder has an average particle diameter D₅₀ of 0.5 to 3 pm, wherein the proportion of particles having a particle diameter of 0.5 pm or less in the silicon nitride powder is 20 to 50% by mass, and the proportion of particles having a particle diameter of 1.0 pm or more in the silicon nitride powder is 20 to 50% by mass.

5. The method for producing a silicon nitride sintered material according to any one of claims 1 to 4, wherein the sintering auxiliary contains a metal oxide.

6. The method for producing a silicon nitride sintered material according to any one of claims 1 to 5, wherein the compound having no oxygen bond contained in the sintering auxiliary is a carbonitride compound containing a rare earth element or a magnesium element.

7. The method for producing a silicon nitride sintered material according to any one of claims 1 to 6, wherein the molded article has a density of 1.95 g/cm³ or more.

8. The method for producing a silicon nitride sintered material according to any one of claims 1 to 7, wherein the obtained silicon nitride sintered material has a thermal conductivity of 80 W/mK or more, as measured by a laser flash method.

9. The method for producing a silicon nitride sintered material according to any one of claims 1 to 8, wherein the obtained silicon nitride sintered material has a dielectric breakdown voltage of 11 kV or more.

10. The method for producing a silicon nitride sintered material according to any one of claims 1 to 9, wherein the obtained silicon nitride sintered material has an Ra of 0.6 pm or less.
